# EUROPEAN PATENT SPECIFICATION

(11) **EP 2 192 240 B1**
(45) Date of publication and mention of the grant of the patent: **29.02.2012**
(21) Application number: 09176621.2
(22) Date of filing: 20.11.2009
(51) Int. Cl.: E02F 9/00, B60R 3/00

(54) **Footstep for excavator**
Trittbrett für Bagger
Marche pour excavateur

(30) Priority: 28.11.2008 KR 20080119840
(43) Date of publication of application: 02.06.2010
(73) Proprietor: Volvo Construction Equipment Holding Sweden AB, 631 85 Eskilstuna (SE)
(72) Inventor: Ikeda, Toshimichi, Gyungsangnam-do (KR); Cho, Gyen Soo, Gyungsangnam-do (KR); Kim, Han Jin, Gyungsangnam-do (KR)
(74) Representative: Zimmermann, Tankred Klaus

(56) References cited:
- WO-A-2006/097585
- GB-A- 2 019 478
- JP-A- 10 071 893
- JP-A- 2006 001 315
- KR-A- 20070 067 938
- US-A- 6 000 496

## Description

### CROSS-REFERENCE TO RELATED APPLICATION

This application is based on and claims priority from Korean Patent Application No. 10-2008-0119840, filed on November 28, 2009 in the Korean Intellectual Property Office.

### BACKGROUND OF THE INVENTION

### Field of the invention

The present invention relates to a footstep for an excavator, in which the footstep, that is fixed to a track side frame so that an operator can get on/off a cab and so on therethrough, can be protected from an external impact during operation of the excavator in an inferior working environment.

More particularly, the present invention relates to a footstep for an excavator, in which a head part of a fastening member for fixing the footstep to a side frame is surrounded by a plate material that forms the footstep to prevent the footstep from being damaged by rocks and so on during operation of the excavator.

### Description of the Prior Art

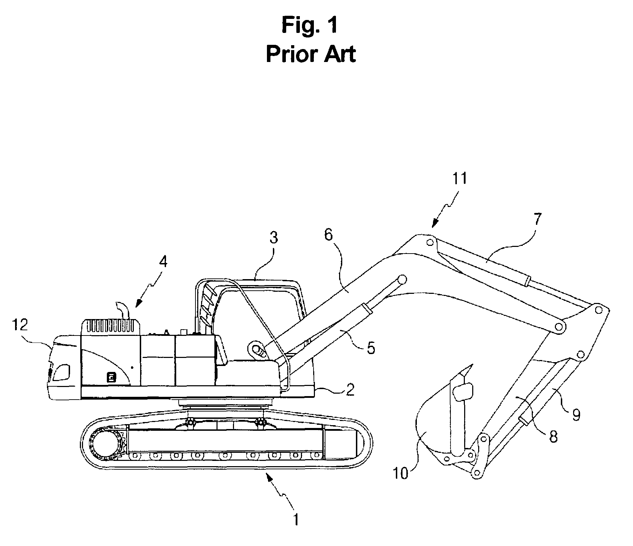

As illustrated in FIG. 1, a general track type excavator includes a lower driving structure 1; an upper frame 2 mounted on the lower driving structure 1 to be swiveled; a cap 3 and an engine room 4 mounted on the upper frame 2; working devices 11 including a boom 5 rotatably fixed to the upper frame 2 to be driven by a boom cylinder 5, an arm 8 connected to the boom 6 to be driven by an arm cylinder 7, and a bucket 10 connected to the arm 8 to be driven by a bucket cylinder 9; and a counter weight 12 mounted in the rear of the upper frame 2 to keep the balance of the equipment during working.

In the case in which a cab of an excavator has a height of more than 1.5m from the ground, a footstep is fixed to an outside of a track side frame so that an operator can easily get on/off the cab.

In this case, since the footstep is fixed to a position near the ground, the damage of the footstep frequently occurs due to its contact or collision with rocks, obstacles, and the like, during working of the excavator in an inferior working environment.

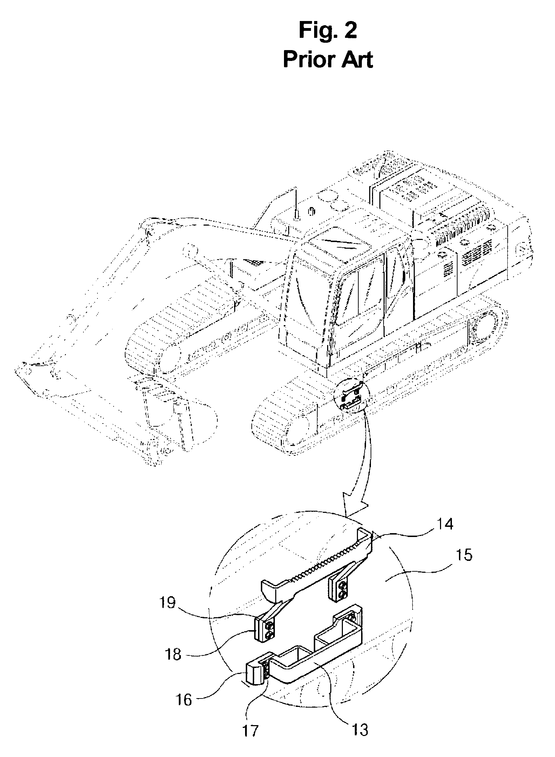

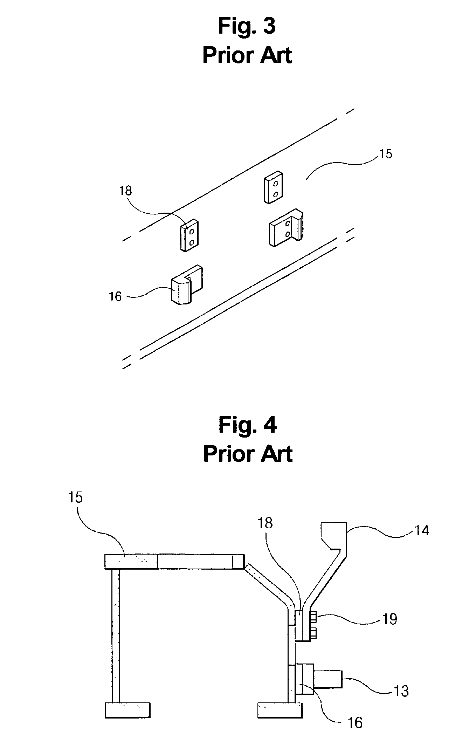

As illustrated in FIGs. 2 to 4, a conventional footstep for an excavator is composed of first and second steps 13 and 14. In the case of fixing the footstep to a side frame 15, the first step (i.e. a lower step) 13 is fixed to a first fixing bracket 16, which is fixed by welding to face the side frame 15, by a fastening member 17, and the second step (i.e. an upper step) 14 is fixed to a second fixing bracket 18, which is above the first bracket 16 and is fixed by welding to the side frame 15, by a fastening member 19.

Since a head part of the fastening member 17 for fixing the first step 13 to the first fixing bracket 16 is placed near the ground and is exposed without any separate protection tool, it may be damaged due to its contact or collision with rocks during working of the excavator in a quarry and so on.

In this case, although a thick structure of the first fixing bracket 16 is used to prevent the head part of the fastening member 17 from being damaged by rocks and so on, it only brings poor result to lower the practicality.

That is, since the head part of the fastening member 17 is exposed to an outside and the first step 13 is fixed to a position near the ground, the first step 13 is easy to be damaged due to its collision with rocks and so on. Particularly, in the case in which the first step 13 slips up on a solid rock, the load of the excavator is applied to the first step 13, and thus the fastening member 17 may be easily damaged.

Also, since the fastening member 19 for fixing the second step 14 to the side frame 15 is exposed to an outside, it may be easily damaged due to its direct contact with rocks during operation of the excavator.

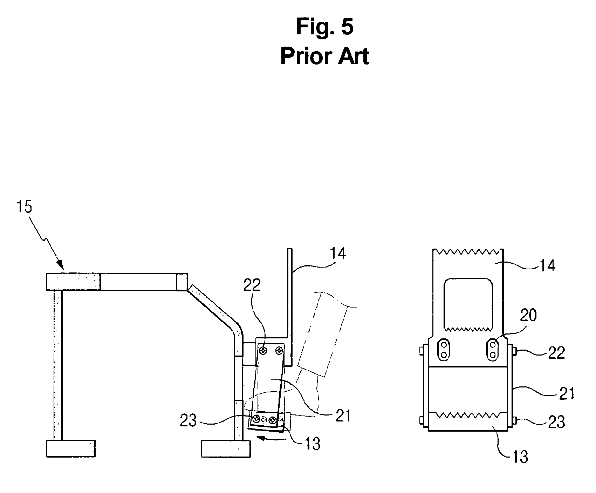

According to another conventional footstep for an excavator, as illustrated in FIG. 5, the second step 14 is fixed to the side frame 15 by a fastening member (not illustrated). Upper sides of elastic pieces (e.g. rubber plates and so on) 21 are fixed to both sides of the second step 14 by a fastening member 22, and the first step 13 is fixed to lower sides of the elastic pieces 21 by a fastening member 23.

When an operator treads on the first step 13, the first step 13 swings due to elastic deformation of the elastic pieces (as indicated by an imaginary line in the drawing). That is, since the tread of the first step 13 is inclined, the operator is instantaneously confused and feels uneasy to lower the feeling in use.

JP 2006 001315 describes a passenger step device of a construction machine. In said passenger step device, lower side frames are retractably provided on the outer side of a lower frame in the vehicle width direction. A step is fixed to the lower side frames selectively to the upper mounting position or the lower mounting position. When the step is fixed to the lower mounting position, the step is arranged so as not to be protruded upward from the lower side frames.

KR 1020070067938 A describes a step for construction machinery having a strong fastening structure for preventing damage and deformation. The step for construction machinery comprises a step plate composed of a step portion to support a worker to board and a side wall portion to connect the step portion with a track frame of construction machinery, flanges extended from the end of each side wall portion of the step plate to be opposite to each other, and a stiffening plate placed between the step plate and the track frame to increase the strength of the step plate.

WO 2006/097585 A1 describes a step assembly for a vehicle. The foot assembly comprises a horizontal step connected on its two sides to substantially vertical elastically deformable side walls, whereof the upper ends are capable of being secured to the vehicle. Said foot plate is characterized in that said side walls have, in a plane parallel to the step, an outwardly convex shape.

GB 2 019 478 A describes a flexible ladder for a vehicle. The ladder is suspended from the side of the drivers platform of a combine harvester by means of eyes at the top. The upper part of the ladder formed by sides and treads is completely rigid. The bottom thread is suspended on flexible straps which allow the tread to deflect in the direction of its length if it hits the ground. The straps are so wide as to be substantially rigid with respect to deflection in the transverse direction.

JP 10 071893 A describes a step structure of a construction machine. A pair of brackets are arranged on a track frame, and plural-group installing holes in pairs being installing means are also provided. The installing holes of a pair of brackets and the installing holes of the step are selectively combined with each other, and a projecting quantity of the step from the track frame being a car body is made freely adjustable. Therefore, an installing method of the step can be changed without replacing the step.

### SUMMARY OF THE INVENTION

Accordingly, the present invention has been made to solve the above-mentioned problems occurring in the prior art while advantages achieved by the prior art are maintained intact.

Embodiments of the present invention relate to a footstep for an excavator, in which a head part of a fastening member for fixing the footstep to a side frame is surrounded by a plate material that forms the footstep, and thus the footstep is prevented from being damaged due to its contact with rocks and so on during operation of the excavator in an inferior working environment to secure the safety.

Embodiments of the present invention relate to a footstep for an excavator, which can reduce the manufacturing cost through simplification of the structure of the footstep.

Embodiments of the present invention relate to a footstep for an excavator, which can improve the feeling in use by preventing a lower step from swinging when an operator treads on the lower step of the footstep.

In one aspect of the present invention, there is provided a footstep for an excavator, mounted on a track side frame of the excavator, which includes an upper step composed of side plates formed on left and right sides to face each other, and a front plate formed in a body with the side plates and having through-holes formed on left and right sides thereof, to protect a head part of a fastening member, which fixes the footstep to the side frame, from an external impact; a fixing plate having both ends fixed to inner surfaces of the side plates to fix the upper step to the side frame by the fastening member that is fastened to pass through the through-holes; and a lower step fixed to lower ends of elastic pieces having upper ends fixed to the side plates, respectively.

In another aspect of the present invention, there is provided a footstep for an excavator, mounted on a track side frame of the excavator, which includes an upper step composed of side plates formed on left and right sides to face each other, and a front plate formed in a body with the side plates and having cutout parts formed on left and right sides thereof, to protect a head part of a fastening member, which fixes the footstep to the side frame, from an external impact; a fixing plate having both ends fixed to inner surfaces of the side plates to fix the upper step to the side frame by the fastening member that is fastened to pass through the cutout parts; and a lower step fixed to lower ends of elastic pieces having upper ends fixed to the side plates, respectively.

In still another aspect which does not form part of the present invention, there is provided a footstep for an excavator, mounted on a track side frame of the excavator, which includes an upper step composed of side plates formed on left and right sides to face each other, and a front plate formed in a body with the side plates and having a cutout part formed thereon, to protect a head part of a fastening member, which fixes the footstep to the side frame, from an external impact; a fixing plate having both ends fixed to inner surfaces of the side plates to fix the upper step to the side frame by the fastening member that is fastened to pass through the cutout part; and a lower step fixed to lower ends of elastic pieces having upper ends fixed to the side plates, respectively.

With the above-described construction, the footstep for an excavator according to the embodiments of the present invention has the following advantages.

The head part of the fastening member for fixing the footstep to the track side frame is surrounded and protected by the plate material that forms the footstep so that the head part is concealed, and thus the footstep can be prevented from being damaged due to its contact with rocks and so on in a quarry and so on.

The manufacturing cost of the footstep can be reduced through simplification of the structure of the footstep.

Operator's feeling of uneasiness can be dissolved, and the feeling in use and reliability of the footstep can be improved by preventing the lower step from swinging when the operator treads on the lower step of the footstep.

### BRIEF DESCRIPTION OF THE DRAWINGS

The above and other objects, features and advantages of the present invention will be more apparent from the following detailed description taken in conjunction with the accompanying drawings, in which:
FIG. 1 is a side view of a general track type excavator;
FIG. 2 is a view illustrating a fixing position of a conventional foot step for an excavator;
FIG. 3 is a schematic view explaining the fixing of a conventional footstep to a side frame;
FIG. 4 is a side view of a conventional footstep for an excavator;
FIG. 5 is a view illustrating the use state of an another conventional footstep for an excavator;
FIG. 6 is a view of the selected main part of a footstep for an excavator according to an embodiment of the present invention;
FIG. 7 illustrates front, side, and plan views of a footstep for an excavator according to an embodiment of the present invention;
FIG. 8 is a view illustrating the use state of a footstep for an excavator according to an embodiment of the present invention;
FIG. 9 is a schematic view of a footstep for an excavator according to another embodiment of the present invention; and
Fig. 10 is a schematic view of a footstep for an excavator according to still another embodiment not forming part the present invention.

### DETAILED DESCRIPTION OF THE PREFERRED EMBODIMENTS

Hereinafter, preferred embodiments of the present invention will be described with reference to the accompanying drawings. The matters defined in the description, such as the detailed construction and elements, are nothing but specific details provided to assist those of ordinary skill in the art in a comprehensive understanding of the invention, and thus the present invention is not limited thereto.

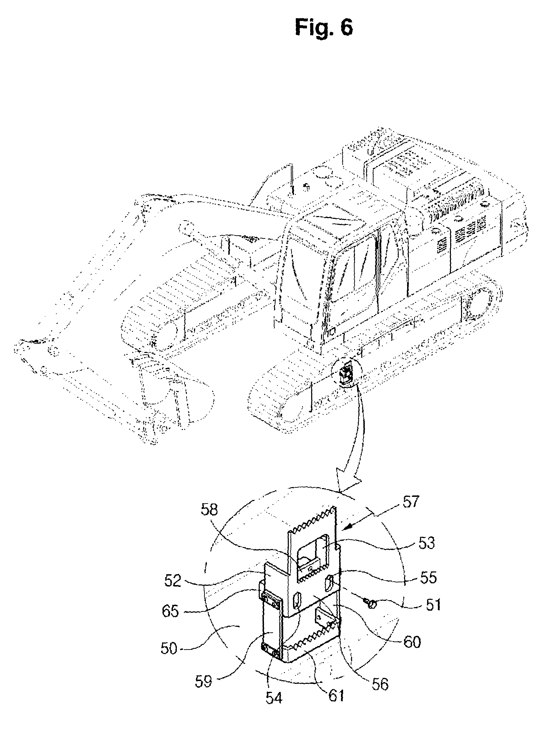

As shown in FIGS. 6 to 8, a footstep for an excavator, mounted on a track side frame of the excavator, according to an embodiment of the present invention includes an upper step 57 composed of side plates 52 and 53 formed to be bent on left and right sides to face each other, and a front plate 56 formed in a body with the side plates 52 and 53 and having through-holes 54 and 55 formed on left and right sides thereof, to surround and protect a head part of a fastening member 51, which fixes the footstep to the side frame 50, from an external impact (e.g. an impact applied to the head part of the footstep when it is in contact or collision with rocks, obstacles, and the like, during working of the excavator in a quarry and so on); a fixing plate 58 having both ends fixed by welding to inner surfaces of the side plates 52 and 53 to fix the upper step 57 to the side frame 50 by the fastening member 51 that is fastened to pass through the through-holes 54 and 55; and a lower step 61 fixed to lower ends of elastic pieces 59 and 60 having upper ends fixed to the side plates 52 and 53, respectively.

The footstep according to an embodiment of the present invention further includes an elastic deformation prevention tool 62 formed to extend from both end parts of the lower step 61, and having a front end part that is in contact with an outer surface of the side frame 50 to prevent elastic deformation of the elastic pieces 59 and 60 when an operator treads on the lower step 61 and the load is applied to the elastic pieces 59 and 60 (e.g. flexible rubber plates).

In this case, if no load is applied to the lower step 61, the both end parts of the lower step 61 are not in contact with the outer surface of the side frame 50. Also, even if the both end parts of the lower step 61 are in contact with the outer surface of the side frame 50, a large force is not applied thereto, and thus the lower step 61 does not cause the damage of the side frame 50.

In the drawing, the unexplained reference numeral 65 denotes a fixing bracket which is fixed by welding to the outer surface of the side frame 50 and to which the fastening member 51 for fixing the fixing plate 58 of the upper step 57 is screw-fastened.

Hereinafter, the use state of the footstep for an excavator according to an embodiment of the present invention will be described in detail.

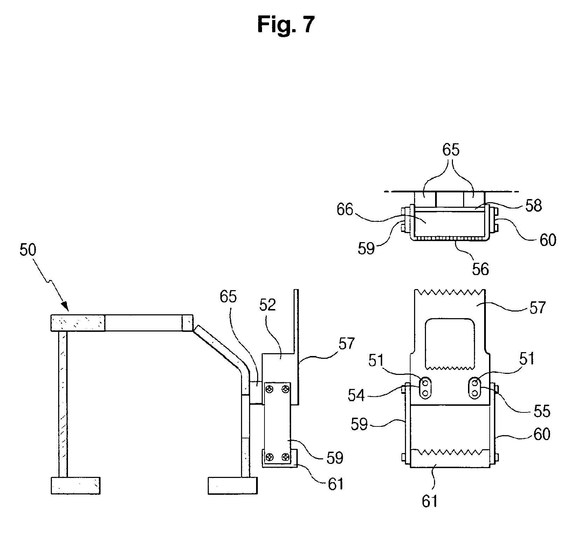

As illustrated in FIGs. 6 and 7, the upper step 57 is composed of the front plate 56 made of a plate material, and the side plates 52 and 53 formed to be bent on left and right sides of the front plate 56. To the inner surfaces of the side plates 52 and 53, both end parts of the fixing plate 58 are fixed by welding. Accordingly, the head part of the fastening member 51 for fixing the fixing plate 58 to the outer surface of the side frame 50 is surrounded by the side plates 52 and 53 and the front plate 56 to be concealed.

In the case in which the fixing plate 58 of the upper step 57 is fixed to the fixing bracket 65 of the side frame 50 by the fastening member 51, the fastening member 51 may be fastened by putting a specified tool (not illustrated) into the through-holes 54 and 55 formed on the left and right sides of the front plate 56.

As described above, the head part of the fastening member 51 for fixing the upper step 57 to the side frame 50 is positioned within an accommodation space 66 formed by the side plates 52 and 53 and the front plate 56 to be protected.

Accordingly, in the case of performing a rock gathering work using an excavator in an inferior work spot such as a quarry and so on, the head part of the fastening member 51 is prevented from being in contact with the rock or from being damaged by scattering pieces of broken rock.

As illustrated in FIG. 7, the fixing bracket 65, to which the fastening member 51 is screw-fastened, is fixed to only an upper part of the outer surface of the side frame 50 so as to fix the fixing plate 58 of the upper step 57 to the side frame 50.

That is, since the fixing bracket for fixing the lower step 61 to the side frame 50 is unnecessary, the fastening member is also unnecessary, and thus the problem that the fastening member for fixing the lower step 61 is damaged by the rocks and so on can be solved.

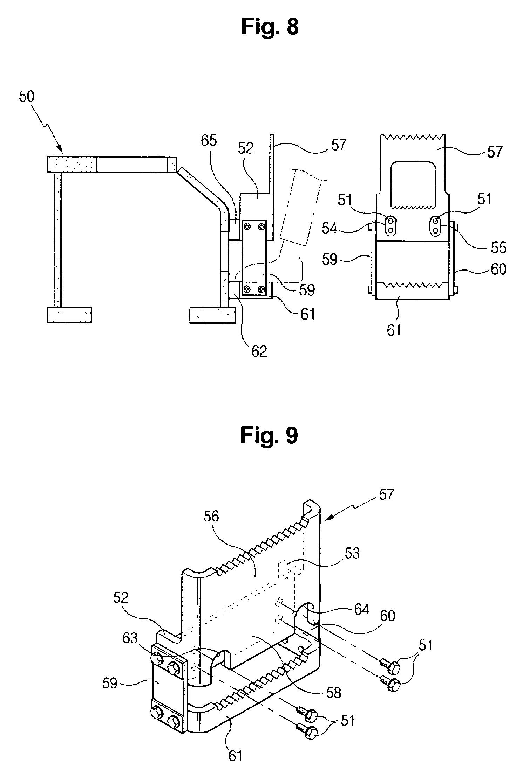

As illustrated in FIG. 8, when an operator treads on the lower step 61 and the load is applied to the elastic pieces 59 and 60, the front end part of the elastic deformation prevention tool 62 formed to extend from the both end parts of the lower step 61 becomes in contact with the outer surface of the side frame 50.

Accordingly, the elastic deformation of the flexible elastic pieces 59 and 60 is minimized, and thus the lower step 61 connected to the upper step 57 in a hanger type is prevented from swing.

As a result, when the operator treads on the lower step 61, the tread is kept at a horizontal level to improve the feeling in use (as illustrated in FIG. 5, in the conventional footstep, the tread of the lower step is inclined, and thus the operator is instantaneously confused to lower the safety of the operator).

As illustrated in FIG. 9, a footstep for an excavator, mounted on a track side frame of the excavator, according to another embodiment of the present invention includes an upper step 57 composed of side plates 52 and 53 formed to be bent on left and right sides to face each other, and a front plate 56 formed in a body with the side plates 52 and 53 and having cutout parts 63 and 64 formed on left and right sides thereof, to surround and protect a head part of a fastening member 51, which fixes the footstep to the side frame 50, from an external impact; a fixing plate 58 having both ends fixed to inner surfaces of the side plates 52 and 53 to fix the upper step 57 to the side frame 50 by the fastening member 51 that is fastened by a tool (not illustrated) passing through the cutout parts 63 and 64; and a lower step 61 fixed to lower ends of elastic pieces 59 and 60 having upper ends fixed to the side plates 52 and 53, respectively.

In this case, since the construction, except for the upper step 57 which is composed of the side plates 52 and 53 and the front plate 56 and in which the fastening member 51 and the cutout parts 63 and 64, through which the tool passes, are formed, is substantially the same as that of the footstep for an excavator according to an embodiment of the present invention, the detailed description thereof will be omitted. In the entire description of the present invention, the same drawing reference numerals are used for the same elements across various figures.

Accordingly, in the case in which the fixing plate 58 of the upper step 57 is fixed to the fixing bracket (not illustrated) of the side frame 50 by the fastening member 51 as described above, the fastening member 51 can be fastened by putting a specified tool into a space secured by the cutout parts 63 and 64 formed on the left and right sides of the front plate 56.

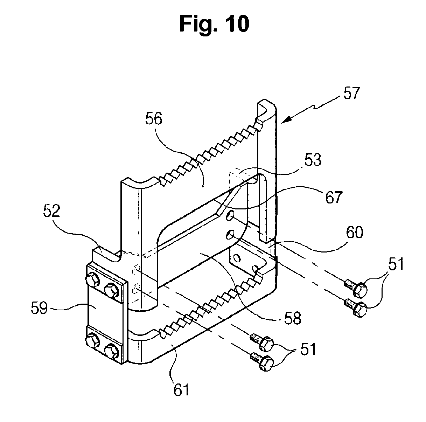

As illustrated in FIG. 10, a footstep for an excavator, mounted on a track side frame of the excavator, according to still another embodiment, which does not form part of the present invention includes an upper step 57 composed of side plates 52 and 53 formed to be bent on left and right sides to face each other, and a front plate 56 formed in a body with the side plates 52 and 53 and having a cutout part 67 formed thereon, to surround and protect a head part of a fastening member 51, which fixes the footstep to the side frame 50, from an external impact; a fixing plate 58 having both ends fixed to inner surfaces of the side plates 52 and 53 to fix the upper step 57 to the side frame 50 by the fastening member 51 that is fastened by a tool (not illustrated) passing through the cutout part 67; and a lower step 61 fixed to lower ends of elastic pieces 59 and 60 having upper ends fixed to the side plates 52 and 53, respectively.

In this case, since the construction, except for the upper step 57 which is composed of the side plates 52 and 53 and the front plate 56 and in which the fastening member 51 and the cutout part 67, through which the tool passes, are formed, is substantially the same as that of the footstep for an excavator according to an embodiment of the present invention, the detailed description thereof will be omitted. In the entire description of the present invention, the same drawing reference numerals are used for the same elements across various figures.

As described above, in the footstep for an excavator according to the embodiments of the present invention, the head part of the fastening member for fixing the footstep to the track side frame is surrounded by the plate material that forms the footstep so that the head part is concealed, and thus the footstep can be prevented from being damaged by rocks in a quarry and so on.

Also, the manufacturing cost of the footstep can be reduced through simplification of the structure of the footstep, and the lower step is prevented from swinging to improve the feeling in use and the reliability of the footstep when the operator treads on the lower step of the footstep.

Although preferred embodiments of the present invention have been described for illustrative purposes, those skilled in the art will appreciate that various modifications, additions and substitutions are possible, without departing from the scope of the invention as disclosed in the accompanying claims.

## Claims

1. A footstep for being mounted on a track side frame (50) of an excavator, comprising:
an upper step (57) composed of side plates (52, 53) formed on left and right sides to face each other, and a front plate (56) formed in a body with the side plates (52, 53) and having through-holes (54, 55) formed on left and right sides thereof, to protect a head part of a fastening member (51), which is suitable for fixing the footstep to the side frame (50), from an external impact;
a fixing plate (58) having both ends fixed to inner surfaces of the side plates (52, 53) to fix the upper step (57) to the side frame (50) by the fastening member (51) that is fastened to pass through the through-holes (54, 55); and
a lower step (61) fixed to lower ends of elastic pieces (59, 60) having upper ends fixed to the side plates (52, 53), respectively.

2. The footstep of claim 1, further comprising an elastic deformation prevention tool (62) formed to extend from both end parts of the lower step (61), and having a front end part that is in contact with an outer surface of the side frame (50) to prevent elastic deformation of the elastic pieces when an operator treads on the lower step (61) and load is applied to the elastic pieces (59, 60).

3. A footstep for being mounted on a track side frame (50) of an excavator, comprising:
an upper step (57) composed of side plates (52, 53) formed on left and right sides to face each other, and a front plate (56) formed in a body with the side plates (52, 53) and having cutout parts (63, 64) formed on left and right sides thereof, to protect a head part of a fastening member (51), which is suitable for fixing the footstep to the side frame (50), from an external impact;
a fixing plate (58) having both ends fixed to inner surfaces of the side plates (52, 53) to fix the upper step (57) to the side frame (50) by the fastening member (51) that is fastened to pass through the cutout parts (63, 64); and
a lower step (61) fixed to lower ends of elastic pieces (59, 60) having upper ends fixed to the side plates (52, 53), respectively.

4. The footstep of claim 3, further comprising an elastic deformation prevention tool (62) formed to extend from both end parts of the lower step (61), and having a front end part that is in contact with an outer surface of the side frame (50) to prevent elastic deformation of the elastic pieces when an operator treads on the lower step (61) and load is applied to the elastic pieces (59, 60).

## Patentansprüche

1. Eine Trittstufe zum Anbringen an einem Spurseitenrahmen (50) eines Baggers, die folgende Merkmale aufweist:
eine obere Stufe (55), die aus Seitenplatten (52, 53), die so auf einer linken und rechten Seite gebildet sind, dass sie einander zugewandt sind, und aus einer Vorderplatte (56) gebildet ist, die in einem Körper mit den Seitenplatten (52, 53) gebildet ist und Durchgangslöcher (54, 55) aufweist, die auf der linken und rechten Seite derselben gebildet sind, um einen Kopfteil eines Befestigungsbauglieds (51), das zum Anbringen der Trittstuffe an dem Seitenrahmen (50) geeignet ist, vor einer äußeren Einwirkung zu schützen;
eine Anbringplatte (58), deren beide Enden an Innenoberflächen der Seitenplatten (52, 53) angebracht sind, um die obere Stufe (57) anhand des Befestigungsbauglieds (51), das dahingehend befestigt ist, durch die Durchgangslöcher (54, 55) hindurch zu gelangen, an dem Seitenrahmen (50) anzubringen; und
eine untere Stufe (61), die an unteren Enden elastischer Stücke (59, 60) angebracht ist, deren obere Enden an den jeweiligen Seitenplatten (52, 53) befestigt sind.

2. Die Trittstufe gemäß Anspruch 1, die ferner ein Werkzeug zur Verhinderung einer elastischen Verformung (62) aufweist, das dazu gebildet ist, sich von beiden Endteilen der unteren Stufe (61) zu erstrecken, und die ein Vorderendteil aufweist, das in Kontakt mit einer Außenoberfläche des Seitenrahmens (50) steht, um eine elastische Verformung der elastischen Stücke zu verhindern, wenn eine Bedienperson auf die untere Stufe (61) tritt und Last an die elastischen Stücke (59, 60) angelegt wird.

3. Eine Trittstufe zum Anbringen an einem Spurseitenrahmen (50) eines Baggers, die folgende Merkmale aufweist:
eine obere Stufe (55), die aus Seitenplatten (52, 53), die so auf einer linken und rechten Seite gebildet sind, dass sie einander zugewandt sind, und aus einer Vorderplatte (56) gebildet ist, die in einem Körper mit den Seitenplatten (52, 53) gebildet ist und Ausschnittsteile (63, 64) aufweist, die auf der linken und rechten Seite derselben gebildet sind, um einen Kopfteil eines Befestigungsbauglieds (51), das zum Anbringen der Trittstuffe an dem Seitenrahmen (50) geeignet ist, vor einer äußeren Einwirkung zu schützen;
eine Anbringplatte (58), deren beide Enden an Innenoberflächen der Seitenplatten (52, 53) angebracht sind, um die obere Stufe (57) anhand des Befestigungsbauglieds (51), das dahingehend befestigt ist, durch die Ausschnittsteile (63, 64) hindurch zu gelangen, an dem Seitenrahmen (50) anzubringen; und
eine untere Stufe (61), die an unteren Enden elastischer Stücke (59, 60) angebracht ist, deren obere Enden an den jeweiligen Seitenplatten (52, 53) befestigt sind.

4. Die Trittstufe gemäß Anspruch 3, die ferner ein Werkzeug zur Verhinderung einer elastischen Verformung (62) aufweist, das dazu gebildet ist, sich von beiden Endteilen der unteren Stufe (61) zu erstrecken, und die ein Vorderendteil aufweist, das in Kontakt mit einer Außenoberfläche des Seitenrahmens (50) steht, um eine elastische Verformung der elastischen Stücke zu verhindern, wenn eine Bedienperson auf die untere Stufe (61) tritt und Last an die elastischen Stücke (59, 60) angelegt wird.

## Revendications

1. Marchepied pour être monté sur un cadre latéral de chenille (50) d'un excavateur, comprenant:
une marche supérieure (57) composée de plaques latérales (52, 53) formées des côtés gauche et droit de manière à se faire face, et d'une plaque avant (56) formée dans un corps avec les plaques latérales (52, 53) et présentant des trous traversants (54, 55) formés des côtés gauche et droit de celle-ci, pour protéger une partie de tête d'un élément de fixation (51), qui convient pour fixer le marchepied au cadre latéral (50), contre un choc extérieur;
une plaque de fixation (58) présentant les deux extrémités fixées à des surfaces intérieures des plaques latérales (52, 53), pour fixer la marche supérieure (57) au cadre latéral (50) par l'élément de fixation (51) qui est fixé de manière à passer par les trous traversants (54, 55); et
une marche inférieure (61) fixée aux extrémités inférieures de pièces élastiques (59, 60) présentant des extrémités supérieures fixées aux plaques latérales (52, 53), respectivement.

2. Marchepied selon la revendication 1, comprenant par ailleurs un outil de prévention de déformation élastique (62) formé de manière à s'étendre à partir des deux parties d'extrémité de la marche inférieure (61), et présentant une partie d'extrémité avant qui est en contact avec une surface extérieure du cadre latéral (50), pour empêcher une déformation élastique des pièces élastiques lorsqu'un opérateur monte sur la marche inférieure (61) et qu'une charge est appliquée sur les pièces élastiques (59, 60).

3. Marchepied pour être monté sur un cadre latéral de chenille (50) d'un excavateur, comprenant:
une marche supérieure (57) composée de plaques latérales (52, 53) formées des côtés gauche et droit de manière à se faire face, et d'une plaque avant (56) formée dans un corps avec les plaques latérales (52, 53) et présentant des parties découpées (63, 64) formées des côtés gauche et droit de celle-ci, pour protéger une partie de tête d'un élément de fixation (51), qui convient pour fixer le marchepied au cadre latéral (50), contre un choc extérieur;
une plaque de fixation (58) présentant les deux extrémités fixées à des surfaces intérieures des plaques latérales (52, 53), pour fîxer la marche supérieure (57) au cadre latéral (50) par l'élément de fixation (51) qui est fixé de manière à passer par les parties découpées (63, 64); et
une marche inférieure (61) fixée aux extrémités inférieures de pièces élastiques (59, 60) présentant des extrémités supérieures fixées aux plaques latérales (52, 53), respectivement.

4. Marchepied selon la revendication 3, comprenant par ailleurs un outil de prévention de déformation élastique (62) formé de manière à s'étendre à partir des deux parties d'extrémité de la marche inférieure (61), et présentant une partie d'extrémité avant qui est en contact avec une surface extérieure du cadre latéral (50), pour empêcher une déformation élastique des pièces élastiques lorsqu'un opérateur monte sur la marche inférieure (61) et qu'une charge est appliquée sur les pièces élastiques (59, 60).
